# EUROPÄISCHE PATENTSCHRIFT

(11) **EP 3 321 761 B1**
(45) Veröffentlichungstag und Bekanntmachung des Hinweises auf die Patenterteilung: **23.09.2020**
(21) Anmeldenummer: 17200570.4
(22) Anmeldetag: 08.11.2017
(51) Int. Cl.: G05F 1/46

(54) **VERSORGEN EINES ELEKTRISCHEN VERBRAUCHERS MIT ELEKTRISCHER ENERGIE AUS EINER SPANNUNGSQUELLE**
SUPPLY OF AN ELECTRIC CONSUMER WITH ELECTRICAL ENERGY FROM A VOLTAGE SOURCE
FOURNITURE D'UN CONSOMMATEUR ÉLECTRIQUE EN ÉNERGIE ÉLECTRIQUE PROVENANT D'UNE SOURCE DE TENSION

(30) Priorität: 11.11.2016 DE 102016121658
(43) Veröffentlichungstag der Anmeldung: 16.05.2018
(73) Patentinhaber: OSRAM GmbH, 80807 München (DE)
(72) Erfinder: Zitzelsperger, Thomas, 80992 München (DE)
(74) Vertreter: Hofstetter, Schurack & Partner

(56) Entgegenhaltungen:
- EP-A1- 0 883 051
- WO-A1-2009/083962
- GB-A- 2 369 458
- US-B1- 6 798 177
- PH D JOSE MIGUEL DE DIEGO ET AL: "Improvements of Power Supply Systems in Machine to Machine Modules and Fixed Cellular Terminals with Discontinuous Current Consumption", INDUSTRIAL TECHNOLOGY, 2006. ICIT 2006. IEEE INTERNATIONAL CONFERENCE ON, IEEE, PI, 1. Dezember 2006 (2006-12-01), Seiten 2575-2580, XP031178172, ISBN: 978-1-4244-0725-5

## Beschreibung

Die Erfindung betrifft eine Schaltungsanordnung zum Versorgen eines elektrischen Verbrauchers mit elektrischer Energie aus einer Spannungsquelle, mit einem Eingangsanschluss zum Anschließen an die Spannungsquelle, einem Ausgangsanschluss zum Anschließen an den Verbraucher, einem elektrischen Ladungsspeicher zum Speichern von elektrischer Ladung, einer mit dem Eingangsanschluss und dem Ladungsspeicher elektrisch gekoppelten Konstantstromschaltung zum Beaufschlagen des Ladungsspeichers mit einem vorgebbaren elektrischen Strom, einer mit dem Ladungsspeicher und dem Ausgangsanschluss elektrisch gekoppelten Längsreglerschaltung zum Bereitstellen eines geregelten elektrischen Potentials am Ausgangsanschluss, einer parallel zur Konstantstromschaltung mit dem Eingangsanschluss und dem Ladungsspeicher elektrisch gekoppelten, mittels eines Steuersignals steuerbaren Bypass-Schaltung zum Beaufschlagen des Ladungsspeichers mit einem elektrischen Bypass-Strom sowie einer Steuereinheit zum Bereitstellen des Steuersignals. Weiterhin betrifft die Erfindung eine Leuchteinrichtung mit einem Leuchtmittel, einer Spannungsquelle zum Versorgen des Leuchtmittels und eines elektrischen Verbrauchers mit elektrischer Energie sowie mit einer Schaltungsanordnung zum elektrischen Koppeln der Spannungsquelle mit dem elektrischen Verbraucher. Schließlich betrifft die Erfindung auch ein Verfahren zum Versorgen eines elektrischen Verbrauchers mit elektrischer Energie aus einer Spannungsquelle, bei dem ein elektrischer Ladungsspeicher zum Speichern von elektrischer Ladung mittels einer an die Spannungsquelle angeschlossenen Konstantstromschaltung mit einem vorgegebenen elektrischen Strom beaufschlagt wird, wobei mittels einer am Ladungsspeicher angeschlossenen Längsreglerschaltung ein geregeltes elektrisches Potential für den Verbraucher bereitgestellt wird, wobei der Ladungsspeicher mittels einer Bypass-Schaltung parallel zum Strom der Konstantstromschaltung mit einem elektrischen Bypass-Strom beaufschlagt wird, wobei die Bypass-Schaltung mittels eines Steuersignals einer Steuereinheit gesteuert wird.

Schaltungsanordnungen, Leuchteinrichtungen mit solchen Schaltungsanordnungen sowie auch Verfahren zum Betreiben solcher Schaltungsanordnungen sind im Stand der Technik (wie z.B. US6798177) umfänglich bekannt, sodass es eines gesonderten druckschriftlichen Nachweises hierfür nicht bedarf. Derartige Schaltungsanordnungen dienen der Versorgung von Verbrauchern mit elektrischer Energie, die durch die elektrische Spannungsquelle bereitgestellt wird. Bei Leuchteinrichtungen kann der Verbraucher durch eine elektrische Schaltung gebildet sein, die die Leuchteinrichtung mit einer zusätzlichen Funktion versieht, die nicht zwingend mit der eigentlichen Leuchtfunktion der Leuchteinrichtung in Zusammenhang steht. Hierdurch können sogenannte "smarte" Leuchteinrichtungen geschaffen werden, die eine zusätzliche Funktionalität ermöglichen.

Für den bestimmungsgemäßen Betrieb des Verbrauchers ist es erforderlich, diesen mit elektrischer Energie zu versorgen, die bei Leuchteinrichtungen der gattungsgemäßen Art üblicherweise durch die Spannungsquelle bereitgestellt wird, die zugleich auch das Leuchtmittel der Leuchteinrichtung mit elektrischer Energie versorgt. Die Spannungsquelle kann beispielsweise ein Netzteil sein, welches an ein öffentliches Energieversorgungsnetz angeschlossen ist, um elektrische Energie aus dem öffentlichen Energieversorgungsnetz für den bestimmungsgemäßen Betrieb der Leuchteinrichtung bereitstellen zu können. Üblicherweise ist die Spannungsquelle für die Versorgung des Leuchtmittels ausgelegt. Entsprechend weist die Spannungsquelle einen Innenwiderstand auf, der den zuverlässigen und bestimmungsgemäßen Betrieb des Leuchtmittels gewährleistet. Hinsichtlich der Leistung und des Innenwiderstands ist die Spannungsquelle somit an das Leuchtmittel in der Regel angepasst. Wird nun zusätzlich der Verbraucher aus der Spannungsquelle mit elektrischer Energie versorgt, so kann es aufgrund von Energiebedarfsschwankungen des Verbrauchers auch zu Spannungsschwankungen an der Spannungsquelle aufgrund der schwankenden Belastung kommen, die sich auf das Leuchtmittel auswirken können. Beispielsweise kann die Helligkeit des Leuchtmittels durch die Spannungsschwankungen beeinträchtigt sein, sodass entsprechende Helligkeitsschwankungen die Folge sein können. Weist zum Beispiel das Leuchtmittel Leuchtdioden oder eine Leuchtdiodenanordnung auf, ist die Spannungsquelle üblicherweise zur Bereitstellung eines vorgegebenen Stromes für die Leuchtdioden beziehungsweise die Leuchtdiodenanordnung ausgebildet. Entsprechend hoch kann der Innenwiderstand der Spannungsquelle ausgebildet sein, insbesondere wenn gewünscht ist, die Leuchtdioden beziehungsweise die Leuchtdiodenanordnung mit einem im Wesentlichen konstanten Strom zu betreiben. Hier können sich Energiebedarfsschwankungen des Verbrauchers besonders ungünstig auswirken.

Das vorgenannte Problem ist natürlich nicht auf Leuchteinrichtungen beschränkt, sondern kann bei einem Betrieb von Spannungsquellen allgemeiner Art grundsätzlich auftreten. Eine Spannungsquelle mit einem hohen Innenwiderstand, die deutliche Spannungsschwankungen bei unterschiedlichen Belastungen zeigt, wird auch als weiche Energiequelle beziehungsweise weiche Spannungsquelle bezeichnet. Bei Betrieb des Verbrauchers an einer weichen Energiequelle beziehungsweise Spannungsquelle kann die Spannung der Energiequelle beziehungsweise Spannungsquelle einbrechen, sofern von der Energiequelle beziehungsweise Spannungsquelle nicht genug elektrische Energie für einen linearen Stromfluss durch eine Konstantstromschaltung an den Verbraucher geliefert werden kann, zum Beispiel wenn der Verbraucher in einem besonderen Betriebszustand keinen konstanten sondern einen pulsierenden Strom benötigt, weil er zyklisch ein- und ausgeschaltet wird. Das Ein- und Ausschalten führt zu entsprechenden Stromschwankungen, die an der Energiequelle beziehungsweise Spannungsquelle aufgrund des Innenwiderstands zu entsprechenden Spannungsschwankungen führen.

Im Stand der Technik ist es ferner bekannt, die vorgenannte Problematik dadurch zu reduzieren, dass einerseits zur Konstantstromschaltung eine Bypass-Schaltung parallelgeschaltet wird und diese Parallelschaltung an eine Spannungsreglerschaltung nach Art eines Längsreglers angeschlossen ist, der die Parallelschaltung mit der Spannungsquelle koppelt. Die Bypass-Schaltung wird dabei zeitgesteuert aktiviert beziehungsweise deaktiviert, und zwar in Abhängigkeit eines Einschaltens von der Spannungsquelle. Mit dieser Schaltung kann zwar die Rückwirkung auf die Spannungsquelle beim Einschalten der Spannungsquelle reduziert werden, jedoch erweist sich die Schaltung als sehr aufwändig und benötigt darüber hinaus einen ergänzenden Spannungsbereich zum Betrieb eines erforderlichen vorgeschalteten Spannungsreglers. Die Einsatzmöglichkeiten dieser Schaltungsanordnung sind daher begrenzt.

Der Erfindung liegt deshalb die Aufgabe zugrunde, eine Schaltungsanordnung, eine Leuchteinrichtung sowie ein Verfahren anzugeben, die ein verbessertes Versorgen des elektrischen Verbrauchers mit elektrischer Energie aus der Spannungsquelle ermöglichen.

Als Lösung werden mit der Erfindung eine Schaltungsanordnung, eine Leuchteinrichtung sowie auch ein Verfahren gemäß den unabhängigen Ansprüchen vorgeschlagen.

Weitere vorteilhafte Ausgestaltungen der Erfindung ergeben sich anhand von Merkmalen der abhängigen Ansprüche.

Bezüglich einer gattungsgemäßen Schaltungsanordnung wird insbesondere vorgeschlagen, dass die Steuereinheit ausgebildet ist, eine elektrische Ladungsspeicherspannung am Ladungsspeicher zu erfassen und das Steuersignal abhängig von der erfassten Ladungsspeicherspannung bereitzustellen.

Bezüglich einer gattungsgemäßen Leuchteinrichtung wird insbesondere vorgeschlagen, dass die Schaltungsanordnung gemäß der Erfindung ausgebildet ist.

Bezüglich eines gattungsgemäßen Verfahrens wird insbesondere vorgeschlagen, dass eine elektrische Ladungsspeicherspannung am Ladungsspeicher erfasst und das Steuersignal abhängig von der erfassten Ladungsspeicherspannung bereitgestellt wird.

Es ist ein Aspekt der Erfindung, einen elektrischen Verbraucher aus einer weichen Energiequelle beziehungsweise Spannungsquelle versorgen zu können, insbesondere wenn der Verbraucher für seinen bestimmungsgemäßen Betrieb zumindest teilweise impulsförmig Strom benötigt. Um möglichst unerwünschte Rückwirkungen aufgrund der weichen Energiequelle beziehungsweise Spannungsquelle vermeiden zu können, ist vorzugsweise eine Strombelastung der weichen Energiequelle beziehungsweise Spannungsquelle möglichst konstant zu halten. Dies kann durch die Konstantstromschaltung erreicht werden, mittels der die weiche Energiequelle, hier die Spannungsquelle, im Wesentlichen mit einem vorgebbaren konstanten Strom belastet werden kann. Dadurch kann erreicht werden, dass sich an der Energiequelle beziehungsweise der Spannungsquelle im Wesentlichen stationäre Bedingungen einstellen. Insbesondere Rückwirkungen wie Spannungsschwankungen oder dergleichen können an der Energiequelle beziehungsweise der Spannungsquelle reduziert, wenn nicht sogar vollständig vermieden werden. Dadurch können natürlich in der Folge auch Rückwirkungen auf etwaige, an der Energiequelle beziehungsweise Spannungsquelle angeschlossene weitere Verbraucher weitgehend reduziert oder vermieden werden. So kann bei einer Leuchteinrichtung vermieden werden, dass durch die Spannungsquelle beziehungsweise die Energiequelle mit elektrischer Energie versorgte Leuchtmittel im Wesentlichen mit gleichmäßigen elektrischen Bedingungen beaufschlagt werden, sodass unerwünschte Auswirkungen wie Flackern einer Lichtemission oder dergleichen vermieden werden können.

Um die impulsförmige Stromversorgung des Verbrauchers trotzdem gewährleisten zu können, ist verbraucherseitig an der Konstantstromschaltung ein elektrischer Ladungsspeicher angeschlossen, der durch die Konstantstromschaltung im Wesentlichen kontinuierlich mit einem, vorzugsweise konstanten, elektrischen Strom beaufschlagt wird, sodass der Ladungsspeicher infolgedessen mit elektrischer Ladung beaufschlagt wird. Der Ladungsspeicher kann dann die in ihm gespeicherte elektrische Ladung dem Verbraucher zur Verfügung stellen. Aufgrund seiner Eigenschaften können durch den Ladungsspeicher insbesondere auch impulsförmige Ströme beziehungsweise Stromimpulse bereitgestellt werden, um den bestimmungsgemäßen Betrieb des Verbrauchers gewährleisten zu können.

Mit der nachgeordneten Längsreglerschaltung kann ein geregeltes elektrisches Potential am Ausgangsanschluss bereitgestellt werden, sodass der Verbraucher vorzugsweise mit einer im Wesentlichen konstanten elektrischen Spannung beaufschlagt werden kann. Dies ist insbesondere dann vorteilhaft, wenn der Verbraucher für seinen bestimmungsgemäßen Betrieb die Versorgung mit elektrischer Energie in einem vorgegebenen Spannungsbereich erfordert, beispielsweise bei elektronischen Schaltungen, insbesondere Halbleiterschaltungen, wie zum Beispiel Mikroprozessoren, Gate Arrays, aber auch analoge integrierte Schaltungen und/oder dergleichen.

Eine elektrische Kapazität des Ladungsspeichers ist vorzugsweise derart bemessen, dass eine zuverlässige elektrische Energieversorgung des Verbrauchers während seines bestimmungsgemäßen Betriebs gewährleistet werden kann. Entsprechend angepasst kann der Strom vorgegebenen werden, der durch die Konstantstromschaltung bereitgestellt werden soll. In der Regel ist der Strom der Konstantstromschaltung auf einen konstanten Wert eingestellt. Es kann aber auch vorgesehen sein, dass der Wert - abhängig vom zu versorgenden Verbraucher - eingestellt werden kann, beispielsweise indem ein den Strom bestimmendes Bauteil entsprechend bestückt wird oder dergleichen.

Um jedoch zusätzliche Verbrauchsschwankungen, beispielsweise in Form von Stromimpulsen, aufgrund des bestimmungsgemäßen Betriebs des Verbrauchers abfangen zu können, ist ergänzend die Bypass-Schaltung vorgesehen, die mittels des Steuersignals der Steuereinheit steuerbar ist. Die Bypass-Schaltung stellt den elektrischen Bypass-Strom bereit, der den Ladungsspeicher ebenso wie der Strom der Konstantstromschaltung beaufschlagt. Dadurch wird der Ladungsspeicher nicht nur durch den Strom der Konstantstromschaltung elektrisch geladen, sondern, sofern ein entsprechendes Steuersignal der Steuereinheit bereitsteht, zusätzlich durch den Bypass-Strom. Sowohl der Strom der Konstantstromschaltung als auch der Bypass-Strom werden der Spannungsquelle entnommen. Die Konstantstromschaltung ist deshalb parallelgeschaltet zur Bypass-Schaltung. Dadurch sind der Strom der Konstantstromschaltung und der Bypass-Strom in der Regel auch gleich gerichtet. Anders als im Stand der Technik ist also bei der Erfindung die Bypass-Schaltung nicht zeitgesteuert, sondern sie wird bedarfsgerecht gesteuert, und zwar unabhängig von der Ladungsspeicherspannung am Ladungsspeicher. Dadurch kann der Betrieb der Bypass-Schaltung zu beliebigen Zeitpunkten aktiviert beziehungsweise auch wieder deaktiviert werden, und zwar vorzugsweise in Abhängigkeit von der jeweils benötigen mittleren elektrischen Energie für den bestimmungsgemäßen Betrieb des Verbrauchers.

Der Ladungsspeicher ist vorzugsweise durch einen oder mehrere elektrische Kondensatoren gebildet, beispielsweise einen Folienkondensator, einen keramischen Kondensator, einen Elektrolytkondensator, Kombinationsschaltungen hiervon oder dergleichen. Darüber hinaus kann der Ladungsspeicher auch einen Akkumulator umfassen, beispielsweise mit einer oder auch mehreren galvanischen Zellen, die abhängig von der erforderlichen elektrischen Spannung in Reihe und/oder parallelgeschaltet sein können. Natürlich kann der Akkumulator auch in Kombinationsschaltung mit einem oder mehreren Kondensatoren vorgesehen sein, beispielsweise nach Art einer Parallelschaltung oder dergleichen.

Die Spannungsquelle kann ein elektrisches Netzteil aber auch einen elektrischen Generator, eine Brennstoffzelle, einen Akkumulator, Kombinationen hiervon und/oder dergleichen umfassen. Insbesondere kann sie auch ein Netzgerät umfassen, welches elektrische Energie aus einem Energieversorgungsnetz wie dem öffentlichen Energieversorgungsnetz bezieht. Die Spannungsquelle stellt vorzugsweise eine elektrische Gleichspannung bereit.

Die Längsreglerschaltung kann eine analoge Schaltung sein, die dazu dient, eine elektrische Eingangsgleichspannung auf eine kleinere Ausgangsgleichspannung zu regeln. Häufig ist die Ausgangsgleichspannung fest eingestellt. Es kann aber auch vorgesehen sein, dass sie einstellbar ist. Die Längsreglerschaltung kann aber auch durch einen getakteten Energiewandler, insbesondere einen Tiefsetzsteller (Buck-Konverter) oder dergleichen gebildet sein. Darüber hinaus besteht natürlich auch die Möglichkeit, dass anstelle des Tiefsetzstellers ein Hochsetzsteller (Boost-Konverter) oder auch eine Kombinationsschaltung hiervon vorgesehen ist.

Der Strom der Konstantstromschaltung ist vorzugsweise ebenso wie der Bypass-Strom ein Gleichstrom, der dem Ladungsspeicher elektrische Ladung zuführt. Vorzugsweise ist nicht nur der Strom der Konstantstromschaltung konstant, sondern auch der Strom der Bypass-Schaltung. In alternativen Ausgestaltungen kann jedoch auch vorgesehen sein, dass der Bypass-Strom nicht konstant ist, sondern beispielsweise mittels des Steuersignals eingestellt werden kann. Zu diesem Zweck kann vorgesehen sein, dass das Steuersignal einen dem einzustellenden Bypass-Strom entsprechenden Wert aufweist. Das Steuersignal kann ein analoges elektrisches Signal sein, Darüber hinaus kann das Steuersignal natürlich auch ein digitales Signal sein.

Insgesamt können mit der Erfindung eine verbesserte Funktion der Schaltungsanordnung und auch einer mit der Schaltungsanordnung ausgerüsteten Leuchteinrichtung sowie auch eine verbesserte entsprechende Verfahrensführung erreicht werden. Die Erfindung ermöglicht es, die Bypass-Schaltung bedarfsweise zu aktivieren und/oder zu deaktivieren, um die zuverlässige Energieversorgung des Verbrauchers zu gewährleisten und zugleich eine Rückwirkung auf die Spannungsquelle möglichst gering zu halten. Insbesondere kann eine selbstregulierende Bypass-Schaltung erreicht werden, die beispielsweise als Analogschaltung oder dergleichen ausgebildet sein kann.

Die Schaltungsanordnung sowie auch Teile davon, beispielsweise die Konstantstromschaltung, die Längsreglerschaltung, die Bypass-Schaltung sowie auch die Steuereinheit können jeweils als elektronische Schaltung ausgebildet sein. Vorzugsweise sind sie als Halbleiterschaltung ausgebildet. Darüber hinaus können sie jedoch auch zumindest teilweise durch eine entsprechend programmierte Rechnereinheit gebildet sein, wobei in diesem Fall vorzugsweise zusätzlich Analog-Digital-Wandler und Digital-Analog-Wandler vorgesehen sind, um eine Signalanpassung zu ermöglichen. So kann die Steuereinheit beispielsweise eine Rechnereinheit umfassen, die das entsprechende Steuersignal für die Bypass-Schaltung bereitstellt. Vorzugsweise sind die vorgenannten Schaltungen jedoch durch Analogschaltungen gebildet, die elektronische Bauteile aufweisen. Zumindest teilweise können sie auch als integrierte Schaltung, beispielsweise durch einen Halbleiter-Chip oder dergleichen gebildet sein. Die vorgenannten Schaltungen können zumindest teilweise auch einstückig, das heißt, als gemeinsame Schaltung ausgebildet sein.

Auch wenn sich die Erfindung besonders vorteilhaft für eine Anwendung bei Spannungsquellen mit einem hohen Innenwiderstand erweist, ist sie hierauf jedoch nicht beschränkt. Auch bei anderen Spannungsquellen, insbesondere mit einem sehr geringen Innenwiderstand, können sich vorteilhaft Wirkungen ergeben, beispielsweise bei Netzteilen in Bezug auf Netzrückwirkungen, Oberwellen und/oder dergleichen sowie auch in Bezug auf eine elektromagnetische Verträglichkeit wie zum Beispiel Funkstörungen oder dergleichen.

Gemäß einer Weiterbildung wird vorgeschlagen, dass die Steuereinheit eine Vergleichseinheit umfasst, die ausgebildet ist, die erfasste Ladungsspeicherspannung mit einem vorgebbaren Vergleichswert zu vergleichen und das Steuersignal abzugeben, wenn die Ladungsspeicherspannung kleiner als der Vergleichswert ist. Die erfasste Ladungsspeicherspannung wird also mit einem vorgebbaren Vergleichswert verglichen und das Steuersignal wird abgegeben, wenn die Ladungsspeicherspannung kleiner als der Vergleichswert ist. Dies ermöglicht es, die Bypass-Schaltung bedarfsweise zu aktivieren beziehungsweise zu deaktivieren, zu welchem Zweck ein entsprechender Vergleichswert vorgegeben wird. Es kann vorgesehen sein, dass lediglich ein einziger Vergleichswert vorgesehen ist. Der Vergleichswert kann jedoch auch für das Aktivieren und das Deaktivieren der Bypass-Schaltung unterschiedlich gewählt sein, beispielsweise um eine Hysterese oder dergleichen bezüglich der Funktion realisieren zu können. Darüber hinaus kann der Vergleichswert natürlich auch einstellbar ausgebildet sein, sodass in Abhängigkeit von weiteren Schaltungs- und/oder Funktionsparametern eine Anpassung an jeweilige Betriebszustände ermöglicht ist. Der Vergleichswert kann darüber hinaus auch durch ein elektronisches Bauteil bereitgestellt sein, beispielsweise eine Schwellspannung eines Transistors oder dergleichen, mittels dem die Bypass-Schaltung aktiviert beziehungsweise deaktiviert werden kann.

Eine Weiterbildung sieht vor, dass die Schaltungsanordnung ein an die Steuereinheit angeschlossenes Widerstandsnetzwerk zum Erfassen der Ladungsspeicherspannung aufweist. Dies ermöglicht es, auf einfache Weise die Ladungsspeicherspannung zu erfassen und steuerungstechnisch auszuwerten. Im einfachsten Fall kann das Widerstandsnetzwerk durch einen Spannungsteiler gebildet sein, der zwei in Reihe geschaltete Widerstände aufweist, deren Reihenschaltung zum Ladungsspeicher parallelgeschaltet ist. An einem Mittelabgriff der hierdurch gebildeten Reihenschaltung kann dann eine der Ladungsspeicherspannung entsprechende Teilspannung erfasst werden, um die bestimmungsgemäße Funktion der Steuereinheit realisieren zu können.

Besonders vorteilhaft wird die Ladungsspeicherspannung mittels des Widerstandsnetzwerkes erfasst, welches zugleich das Steuersignal bereitstellt. Dadurch kann eine sehr einfache Steuereinheit ausgebildet werden, die beispielsweise lediglich aus passiven elektronischen Bauteilen gebildet ist, nämlich vorzugsweise wenigstens aus beiden elektrischen Widerständen der Reihenschaltung. Darüber hinaus können alternativ oder ergänzend auch weitere, insbesondere passive, elektronische Bauteile wie elektrische Kondensatoren, elektrische Spulen und/oder dergleichen vorgesehen sein. Natürlich braucht die Steuereinheit nicht hierauf beschränkt zu sein. Sie kann auch aktive elektronische Bauteile wie Transistoren, Operationsverstärker und/oder dergleichen umfassen. Weiterhin kann die Steuereinheit natürlich für den bestimmungsgemäßen Betrieb auch eine Rechnereinheit umfassen beziehungsweise durch sie gebildet sein, die mit dem Widerstandsnetzwerk zusammenwirkt und hierfür entsprechend ausgebildet ist beziehungsweise angepasst ist, wie oben bereits ausgeführt.

Eine Weiterbildung sieht vor, dass die Steuereinheit zumindest teilweise vom Verbraucher umfasst ist. Die Steuereinheit kann somit zumindest teilweise einstückig mit dem Verbraucher ausgebildet sein. Besonders vorteilhaft ist dies, wenn die Steuereinheit eine Rechnereinheit umfasst beziehungsweise durch diese gebildet ist. Umfasst der Verbraucher ebenfalls eine Rechnereinheit, so kann dessen Rechnereinheit zumindest teilweise auch die Funktion der Steuereinheit übernehmen beziehungsweise bereitstellen. Dadurch kann Aufwand reduziert werden.

Gemäß einer weiteren Ausgestaltung wird vorgeschlagen, dass der Ladungsspeicher einen ersten und einen zweiten elektrischen Kondensator aufweist, wobei zwischen den beiden Kondensatoren eine elektrische Schalteinheit zum schaltenden elektrischen Koppeln der beiden Kondensatoren angeschlossen ist, wobei der erste Kondensator an die Konstantstromschaltung und der zweite Kondensator an die Längsreglerschaltung angeschlossen ist und die Steuereinheit ausgebildet ist, als Ladungsspeicherspannung eine Kondensatorspannung am zweiten Kondensator zu erfassen. Diese Ausgestaltung hat den Vorteil, dass der zweite Kondensator über die Schalteinheit erst dann mit elektrischer Energie beaufschlagt wird, wenn eine elektrische Spannung am ersten Kondensator einen bestimmten, vorgegebenen Vergleichswert überschreitet. Infolgedessen kann erreicht werden, dass eine Versorgungsspannung für den Verbraucher schneller hochgefahren werden kann. Für eine etwaige Impulsstromversorgung des Verbrauchers kann die elektrische Energie jedoch aus beiden elektrischen Kondensatoren entnommen werden. Die Schalteinheit kann ebenso an die Steuereinheit angeschlossen sein, wie die Bypass-Schaltung. Entsprechend stellt die Steuereinheit dann ein Schaltsignal bereit, mittels welchem die Schalteinheit in geeigneter Weise gesteuert werden kann. Die Schalteinheit kann zu diesem Zweck beispielsweise einen Schalttransistor oder dergleichen umfassen.

Darüber hinaus wird vorgeschlagen, dass die Schalteinheit ausgebildet ist, eine Kondensatorspannung am ersten Kondensator zu erfassen, den erfassten Wert mit einem Kondensatorspannungsvergleichswert zu vergleichen und den ersten mit dem zweiten Kondensator dann elektrisch zu koppeln, wenn die Kondensatorspannung größer als der Kondensatorspannungsvergleichswert ist. Dadurch ist es möglich, den Verbraucher zuverlässig einschalten zu können, sodass insbesondere beim Einschalten unerwünschte etwaige undefinierte Zustände vermieden oder zumindest reduziert werden können. Alternativ kann diese Funktion natürlich auch durch die Steuereinheit bereitgestellt werden, die dann die Schalteinheit entsprecht mittels des Schaltsignals steuert.

Eine Weiterbildung sieht vor, dass ein Wert des Bypass-Stroms von einem Wert der Ladungsspeicherspannung abhängt. Der Bypass-Strom braucht bei dieser Ausgestaltung also kein konstanter Strom zu sein, sondern er kann hinsichtlich seines Wertes abhängig von der Ladungsspeicherspannung gewählt sein. Dies ermöglicht es, entsprechend angepasst auf die Versorgungsbedingungen für den Verbraucher reagieren zu können, wobei durch die angepasste Reaktion eine Rückwirkung auf die Spannungsquelle möglichst gering gehalten werden kann. Beispielsweise kann der Wert des Bypass-Stroms proportional zu der Ladungsspeicherspannung sein.

Weiterhin kann vorgesehen sein, dass der Bypass-Strom Stromimpulse umfasst. Die Stromimpulse des Bypass-Stroms können dabei derart gewählt sein, dass Rückwirkungen auf weitere, an der Spannungsquelle angeschlossene Verbraucher im Wesentlichen vermieden werden können. Beispielsweise können die Stromimpulse hochfrequent gewählt sein, vorzugsweise mit einer Wiederholfrequenz im Bereich von größer als etwa 500 Hz, vorzugsweise größer als etwa 1 kHz. Diese Ausgestaltung eignet sich insbesondere für den Fall, dass das Steuersignal der Steuereinheit ein digitales Signal ist, welches beispielsweise von der Rechnereinheit bereitgestellt werden kann. Dadurch kann eine Digital-Analog-Wandlung eingespart werden. Durch die hohe Frequenz können sichtbare Lichtschwankungen vermieden werden, insbesondere wenn es sich bei dem Leuchtmittel um eine Leuchtdiode oder einen Laserscanner handelt.

Gemäß einer weiteren Ausgestaltung wird vorgeschlagen, dass eine elektrische Kapazität des Ladungsspeichers abhängig von einem Aktivierungsenergiebedarf des Verbrauchers gewählt wird. Der Aktivierungsenergiebedarf des Verbrauchers kann beispielsweise der Energiebedarf sein, der benötigt wird, um den Verbraucher vom Einschaltzeitpunkt bis zur Aufnahme eines kontinuierlichen bestimmungsgemäßen Betriebs mit elektrischer Energie zu versorgen. Üblicherweise ist hier eine größere Energiemenge erforderlich, als für den weiteren kontinuierlichen bestimmungsgemäßen Betrieb des Verbrauchers. Insbesondere gilt dies dann, wenn der Verbraucher eine Rechnereinheit umfasst. Darüber hinaus kann der Aktivierungsenergiebedarf auch dadurch gebildet sein, den Verbraucher aus einem Ruhezustand in einen aktiven Zustand zu überführen. Auch hier kann ein erhöhter Energiebedarf erforderlich sein.

Die für die erfindungsgemäße Schaltungsanordnung angegebenen Vorteile und Wirkungen gelten gleichermaßen für die mit der Schaltungsanordnung ausgerüstete Leuchteinrichtung sowie auch das erfindungsgemäße Verfahren und umgekehrt.

Weitere Vorteile und Merkmale ergeben sich aus der folgenden Beschreibung von Ausführungsbeispielen anhand der beigefügten Figuren. In den Figuren bezeichnen gleiche Bezugszeichen gleiche Merkmale und Funktionen.

Es zeigen:
- Fig. 1: ein schematisches Schaltbild für eine Schaltungsanordnung gemäß der Erfindung;
- Fig. 2: in einer schematischen Signaldarstellung ein Einbrechen einer elektrischen Spannung einer Spannungsquelle ohne Betrieb der Bypass-Schaltung gemäß Fig. 1;
- Fig. 3: eine schematische Signaldarstellung wie Fig. 2, wobei die Bypass-Schaltung nunmehr aktiviert ist; und
- Fig. 4: eine schematische Signaldarstellung bei einem Einschaltvorgang der Spannungsquelle gemäß Fig. 1.

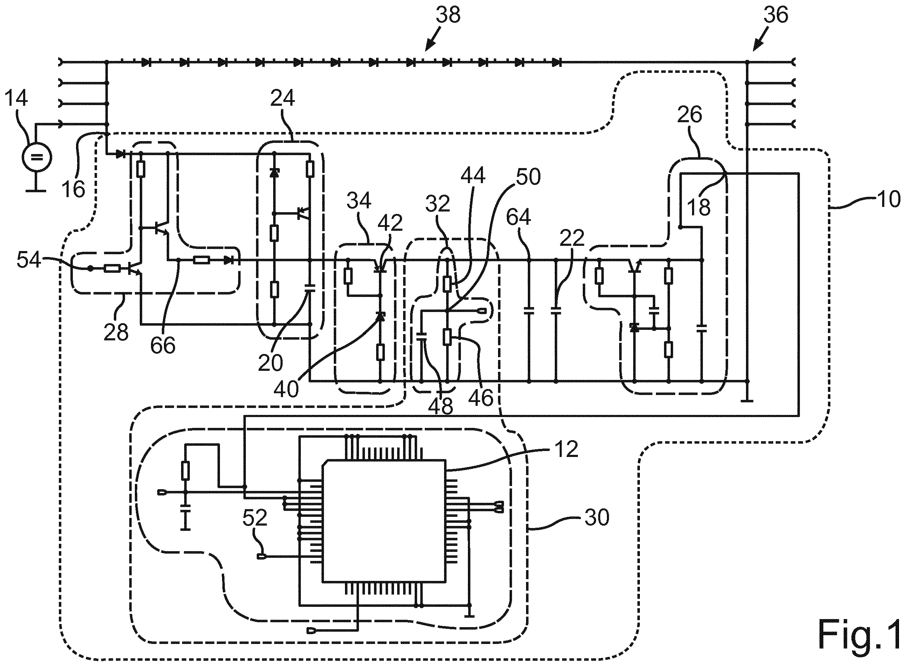

Fig. 1 zeigt in einer schematischen Schaltbildansicht eine Leuchteinrichtung 36, die vorliegend eine leuchtdiodenbasierte Leuchteinrichtung ist. Zu diesem Zweck weist die Leuchteinrichtung 36 in einer nicht weiter dargestellten Konstruktion angeordnete Leuchtdioden 38 als Leuchtmittel auf. Die Leuchtdioden 38 werden aus einer Spannungsquelle 14 mit elektrischer Energie versorgt, sodass sie in bestimmungsgemäßer Weise Licht emittieren. Zu diesem Zweck ist die Leuchteinrichtung 36, das heißt, ihre Spannungsquelle 14, an ein nicht weiter dargestelltes öffentliches Energieversorgungsnetz angeschlossen, aus dem die elektrische Energie für den Betrieb der Leuchteinrichtung 36 bereitgestellt wird.

Die Leuchteinrichtung 36 umfasst ferner einen elektrischen Verbraucher, der vorliegend durch eine Rechnereinheit 12 gebildet ist, die eine Nahfunkfunktion, vorliegend basierend auf Bluetooth, bereitstellt, um dadurch eine "smarte" Leuchteinrichtung 36 zu schaffen. Die Rechnereinheit 12 wird für ihren bestimmungsgemäßen Betrieb ebenfalls mit elektrischer Energie aus der Spannungsquelle 14 versorgt. Vorliegend ist vorgesehen, dass die Energieversorgung der Rechnereinheit 12 mittels einer Schaltungsanordnung 10 erfolgt, die an die Spannungsquelle 14 mit einem Eingangsanschluss 16 angeschlossen ist. Ein Ausgangsanschluss 18 der Schaltungsanordnung 10 ist an die Rechnereinheit 12, das heißt, einen Energieversorgungsanschluss der Rechnereinheit 12 angeschlossen.

Die Schaltungsanordnung 10 dient dem Versorgen der Rechnereinheit 12 mit elektrischer Energie aus der Spannungsquelle 14. Zu diesem Zweck umfasst die Schaltungsanordnung 10 einen elektrischen Ladungsspeicher, der einen ersten Kondensator 20 und einen zweiten Kondensator 22 zum Speichern von elektrischer Ladung umfasst. Der Ladungsspeicher, hier der erste Kondensator 20, ist über eine Konstantstromschaltung 24 mit dem Eingangsanschluss 16 elektrisch gekoppelt und wird durch die Konstantstromschaltung 24 mit einem vorgebbaren elektrischen Strom beaufschlagt. Vorliegend ist der elektrische Strom ein konstant eingestellter Gleichstrom. Dieser kann in alternativen Ausgestaltungen jedoch auch bedarfsgerecht anders eingestellt werden, und zwar vorzugsweise in Abhängigkeit des Energiebedarfs der Rechnereinheit 12. Der elektrische Strom kann darüber hinaus auch den zweiten Kondensator 22 beaufschlagen, wie sich im Folgenden noch ergeben wird.

Ferner ist der Ladungsspeicher, hier der zweite Kondensator 22, elektrisch mit dem Ausgangsanschluss 18 über eine Längsreglerschaltung 26 angeschlossen, die dem Bereitstellen eines geregelten elektrischen Potentials am Ausgangsanschluss 18 dient. Vorliegend wird hierdurch sichergestellt, dass die Rechnereinheit 12 mit einer konstanten Betriebsspannung versorgt wird.

Parallel zur Konstantstromschaltung 24 ist am Eingangsanschluss 16 und am ersten Kondensator 20 eine Bypass-Schaltung 28 angeschlossen, die dazu dient, den Ladungsspeicher, hier insbesondere den Kondensator 20, gegebenenfalls auch zusätzlich den zweiten Kondensator 22, mit einem elektrischen Bypass-Strom zu beaufschlagen. Zu diesem Zweck ist die Bypass-Schaltung 28 mittels eines Steuersignals einer Steuereinheit 30 steuerbar, die das Steuersignal bedarfsgerecht bereitstellt.

Zwischen den beiden Kondensatoren 20, 22 des Ladungsspeichers ist eine elektrische Schalteinheit 34 angeschlossen, die dem schaltenden elektrischen Koppeln der beiden Kondensatoren 20, 22 dient. Die Schalteinheit 34 ist vorliegend dazu ausgebildet, eine Kondensatorspannung am ersten Kondensator 20 zu erfassen, den erfassten Wert mit einem Kondensatorspannungsvergleichswert zu vergleichen und den ersten mit dem zweiten Kondensator 22 dann elektrisch zu koppeln, wenn die Kondensatorspannung größer als der Kondensatorspannungsvergleichswert ist.

Zu diesem Zweck umfasst die Schalteinheit 34 einen vorzugsweise im Schaltbetrieb betriebenen Transistor 42, der vorliegend als bipolarer PNP-Transistor ausgebildet ist, sowie ein Referenzelement 40, welches vorliegend als Zehnerdiode ausgebildet ist. Übersteigt die Kondensatorspannung am ersten Kondensator 20 einen durch das Referenzelement 40 bestimmten Kondensatorspannungsvergleichswert, schaltet der Transistor 42 in den eingeschalteten Zustand und stellt somit eine elektrisch leitende Verbindung zwischen dem ersten und dem zweiten Kondensator 20, 22 her. Sinkt die Kondensatorspannung am ersten Kondensator 20 dagegen unter den Kondensatorspannungsvergleichswert, schaltet der Transistor 42 in einen ausgeschalteten Zustand und unterbricht die elektrische Verbindung zwischen dem ersten und dem zweiten Kondensator 20, 22. Durch diese Schaltungsanordnung kann eine vorteilhafte Funktionalität des Ladungsspeichers in Bezug auf den bestimmungsgemäßen Betrieb erreicht werden, weil diese Schaltungsanordnung eine Entkopplung der elektrischen Energieversorgung zwischen der Spannungsquelle 14 und der Rechnereinheit 12 unterstützt. Im eingeschalteten Zustand der Schalteinheit 34 kann demnach ergänzend auch der zweite Kondensator 22 mit dem Strom der Konstantstromschaltung 24 und dem Bypass-Strom der Bypass-Schaltung 28 beaufschlagt werden.

Vorliegend ist vorgesehen, dass die Steuereinheit 30 ein Widerstandsnetzwerk 32 umfasst sowie dass die Steuereinheit 30 zumindest teilweise von der Rechnereinheit 12 umfasst ist. Das Widerstandsnetzwerk 32 weist eine Reihenschaltung aus zwei Widerständen 44, 46 auf, wobei die Reihenschaltung aus den Widerständen 44, 46 parallel am zweiten Kondensator 22 angeschlossen ist. An einem Mittelabgriff 50 der durch die elektrischen Widerstände 44, 46 gebildeten Reihenschaltung ist ferner ein Kondensator 48 angeschlossen. Dieser dient dazu, das elektrische Potential am Mittelabgriff 50 zu stabilisieren und störfest zu machen. Der Mittelabgriff 50 ist in nicht bezeichneter Weise an die Rechnereinheit 12 angeschlossen.

Somit steht in der Rechnereinheit 12 ein Spannungssignal zur Verfügung, welches einer elektrischen Spannung am zweiten Kondensator 22 des Ladungsspeichers entspricht. Dadurch ist die Steuereinheit 30 in der Lage, die elektrische Ladungsspeicherspannung am Ladungsspeicher, hier dem zweiten Kondensator 22, zu erfassen und das Steuersignal abhängig von der erfassten Ladungsspeicherspannung bereitzustellen.

Zu diesem Zweck umfasst die Rechnereinheit 12 ferner ein entsprechendes Rechnerprogramm, welches die benötigte Funktionalität durch die Rechnereinheit 12 realisiert. An einem Anschluss 52 der Rechnereinheit 12 wird sodann das entsprechende Steuersignal für die Bypass-Schaltung 28 bereitgestellt. Zu diesem Zweck ist der Anschluss 52 mit einem Anschluss 54 der Bypass-Schaltung elektrisch leitend verbunden.

Die Rechnereinheit 12, die die Steuereinheit 30 umfasst, stellt weiterhin eine Vergleichsfunktion bereit, sodass eine Vergleichseinheit gebildet wird. Die Vergleichseinheit ist derart ausgebildet, dass die erfasste Ladungsspeicherspannung mit einem vorgebbaren Vergleichswert verglichen wird und das Steuersignal abgegeben wird, wenn die Ladungsspeicherspannung kleiner als der Vergleichswert ist. Das heißt, dass die Bypass-Schaltung 28 dann aktiviert wird, wenn die elektrische Spannung am zweiten Kondensator 22 einen vorgegebenen Wert unterschreitet, der durch den Vergleichswert bestimmt ist.

Auch wenn vorliegend vorgesehen ist, dass die Rechnereinheit 12 Bestandteil der Steuereinheit 30 ist, ist in einer alternativen Ausgestaltung ebenso denkbar, dass der Mittelabgriff 50 des Widerstandsnetzwerkes 32 unmittelbar an den Anschluss 54 der Bypass-Schaltung 28 angeschlossen ist. In diesem Fall ist die Steuereinheit 30 also ausschließlich durch das Widerstandsnetzwerk 32 gebildet. Das Widerstandsnetzwerk 32 stellt in diesem Fall somit unmittelbar auch das Steuersignal bereit.

Vorliegend ist ferner vorgesehen, dass ein Wert des Bypass-Stroms, der durch die Bypass-Schaltung 28 bereitgestellt wird, von einem Wert der Ladungsspeicherspannung abhängig ist, die mittels der Steuereinheit 30 erfasst wird. Dadurch braucht der Bypass-Strom nicht einen konstanten festen Wert zu haben, sondern er kann bedarfsgerecht variieren. Dies erlaubt es, Rückwirkungen auf die Spannungsquelle 14 so zu reduzieren, dass unerwünschte Auswirkungen auf die Leuchtdioden 38 hinsichtlich der Lichtemissionsfunktion reduziert beziehungsweise weitgehend vermieden werden können. So kann beispielsweise vorgesehen sein, dass bei einer Ladungsspeicherspannung, die größer als der Vergleichswert ist, kein Bypass-Strom durch die Bypass-Schaltung 28 bereitgestellt wird. Erst wenn der Vergleichswert durch die Ladungsspeicherspannung unterschritten wird, erfolgt eine Bereitstellung von Bypass-Strom, wobei vorgesehen sein kann, dass der Bypass-Strom mit zunehmender Abweichung vom Vergleichswert größer eingestellt wird.

Darüber hinaus kann natürlich auch vorgesehen sein, dass anstelle eines im Wesentlichen kontinuierlichen Gleichstroms auch hochfrequente Stromimpulse als Bypass-Strom bereitgestellt werden können, deren Frequenz derart gewählt ist, dass hierdurch verursachte Rückwirkungen auf die Spannungsquelle 14 im Wesentlichen keine sichtbaren Auswirkungen bezüglich der Lichtemission der Leuchtdioden 38 zur Folge haben. Vorteilhaft ist dies beispielsweise, wenn das Steuersignal von der Rechnereinheit 12 bereitgestellt wird und eine Digital-Analog-Wandlung eingespart werden soll und das Steuersignal unmittelbar zur Steuerung der Bypass-Schaltung 28 dienen soll.

Mit der Erfindung ist es also möglich, einen Verbraucher, vorliegend die Rechnereinheit 12, mit einer Spannungsquelle 14 zu verbinden, insbesondere wenn sie eine weiche Energiequelle darstellt. Es ist also möglich, den Verbraucher auch mit einem impulsförmigen Strom aus der weichen Energiequelle zu versorgen, insbesondere wenn der Verbraucher impulsförmig mit elektrischem Strom zu versorgen ist.

Dieser Fall kann zum Beispiel auftreten, wenn die in Fig. 1 dargestellte Rechnereinheit 12 nicht kontinuierlich betrieben wird, sondern beispielsweise aus Gründen des Energieeinsparens im Zeitmultiplex. So kann vorgesehen sein, dass die Rechnereinheit 12 lediglich für eine Zeitdauer von 20 Millisekunden betrieben wird, woraufhin eine betriebslose Phase der Rechnereinheit 12 von etwa 1 Sekunde folgt. Dieser Steuerungsmodus eignet sich insbesondere dann, wenn die Funktion der Rechnereinheit 12 nicht kontinuierlich bereitgestellt zu werden braucht. Um bei diesem Betriebsverhalten eine zuverlässige Funktion in der Leuchteinrichtung 36 zu gewährleisten, wird eine entsprechende Entkopplung der Rechnereinheit 12, das heißt, ihrer Energieversorgung, von der Spannungsquelle 14 mit der Schaltungsanordnung 10 erreicht. Die impulsförmige Stromversorgung für die Rechnereinheit 12 kann mit der Schaltungsanordnung 10 bereitgestellt werden, ohne dass die Spannungsquelle 14 mit einem entsprechenden Impulsstrom beaufschlagt zu werden braucht. Durch die Schaltungsanordnung 10 kann eine im Wesentlichen kontinuierliche Belastung der Spannungsquelle 14 erreicht werden, obwohl die Rechnereinheit 12 impulsförmig mit Strom zu versorgen ist.

Die Aufteilung des Ladungsspeichers in den ersten und den zweiten Kondensator 20, 22 dient insbesondere auch dazu, die Versorgungsspannung für die Rechnereinheit 12 schneller hochfahren zu können. Der impulsförmige Strom zur Versorgung der Rechnereinheit 12 kann jedoch aus beiden Kondensatoren 20, 22 entnommen werden.

Die Funktion der Schaltungsanordnung 10 gemäß Fig. 1 soll anhand der folgenden Figuren weiter erläutert werden.

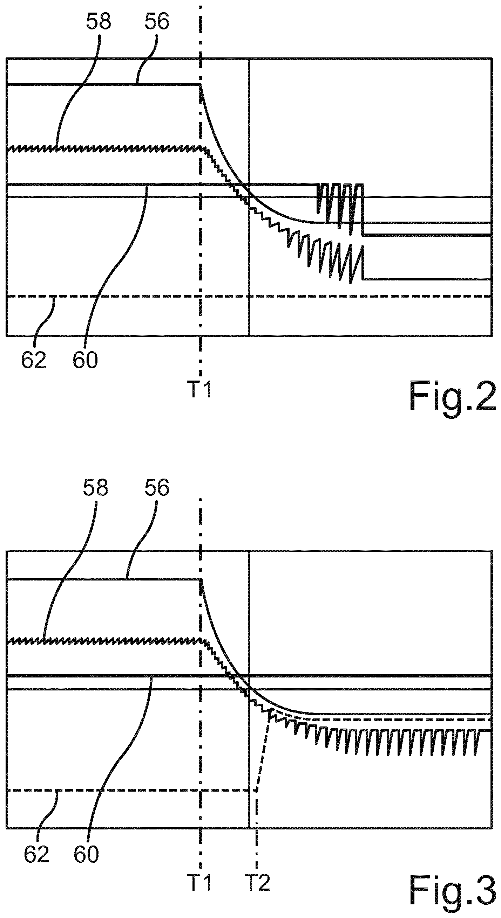

Fig. 2 zeigt zu diesem Zweck ein schematisches Signaldiagramm. Mit einem Graphen 56 ist in Fig. 2 die elektrische Spannung am Eingangsanschluss 16 der Schaltungsanordnung 10 dargestellt. Dies entspricht der durch die Spannungsquelle 14 bereitgestellten elektrischen Spannung. Mit einem Graphen 58 ist die Spannung an einem Punkt 64 in der Schaltungsanordnung 10 gemäß Fig. 1 dargestellt, welches einer elektrischen Spannung am zweiten Kondensator 22 des Ladungsspeichers entspricht. Mit einem Graphen 60 ist die elektrische Spannung am Ausgangsanschluss 18 der Schaltungsanordnung 10 dargestellt. Mit einem Graphen 62 ist eine Spannung an einem Punkt 66 der Schaltungsanordnung 10, hier im Bereich der Bypass-Schaltung 28, dargestellt. Die durch die Graphen 56 bis 62 dargestellten Spannungen sind auf ein Bezugspotential bezogen, welches vorliegend mit GND in Fig. 1 bezeichnet ist.

In der Darstellung gemäß Fig. 2 ist vorgesehen, dass die Bypass-Schaltung 28 kontinuierlich deaktiviert ist. Dies ist durch den Graphen 62 ersichtlich, dessen Spannung konstant auf einem niedrigen Niveau verbleibt, und zwar unabhängig vom Verlauf der übrigen Spannungen. Ersichtlich ist aus Fig. 2 ferner, dass die Spannung am Eingangsanschluss 16 zu einem Zeitpunkt T₁ einbricht, und zwar aufgrund einer Energieanforderung durch die Rechnereinheit 12. Es wird derart viel Energie benötigt, dass auch die Spannung am Punkt 64, das heißt, am zweiten Kondensator 22 entsprechend stark einbricht. Der Spannungseinbruch geht so weit, dass im weiteren Verlauf die Spannung am Ausgangsanschluss 18 durch die Längsreglerschaltung 26 nicht mehr gehalten werden kann und zunächst impulsmäßig einbricht, bis sie dann vollständig auf einem niedrigen Wert verbleibt. Es ist also ersichtlich, dass der bestimmungsgemäße Betrieb der Rechnereinheit 12 durch den Spannungseinbruch am Ausgangsanschluss 18 behindert wird. Es können sogar gestörte Zustände auftreten, die die bestimmungsgemäße Funktion der Rechnereinheit 12 unmöglich machen.

Fig. 3 zeigt eine Darstellung wie Fig. 1, wobei jetzt hier jedoch die Bypass-Schaltung 28 aktiviert ist und in die Funktion eingreift. Zu erkennen ist wieder die Energieanforderung der Rechnereinheit 12 zum Zeitpunkt T₁, die zum Einbruch der elektrischen Spannung der Spannungsquelle 14 führt. Im Unterschied zur Funktion gemäß Fig. 2 ist aus Fig. 3 ersichtlich, dass zum Zeitpunkt T₂ die Bypass-Schaltung 28 aktiviert wird. Dies erfolgt dadurch, dass die Rechnereinheit 12 mittels des Widerstandsnetzwerkes 32 die elektrische Spannung am Punkt 64, das heißt, die elektrische Spannung des zweiten Kondensators 22, erfasst und einen entsprechenden Spannungseinbruch ermittelt. Sodann gibt die Rechnereinheit 12 ein entsprechendes Steuersignal an die Bypass-Schaltung 28 aus, die den Bypass-Strom aktiviert. Dies ist durch einen Spannungsanstieg am Punkt 66 ersichtlich, der zum Zeitpunkt T₂ beginnt. Dadurch wird zusätzlicher Bypass-Strom in den ersten Kondensator 20 und infolgedessen auch in den zweiten Kondensator 22 gefördert. Es ergibt sich in der Folge, dass der Spannungseinbruch am Punkt 64 deutlich geringer ist, sodass die Längsreglerschaltung 26 ihren bestimmungsgemäßen kontinuierlichen Spannungsversorgungsbetrieb aufrechterhalten kann, wie dies durch den Graphen 60 in Fig. 3 dargestellt ist. Obwohl die Spannung gemäß der Graphen 56 und 58 einbricht, kann die Spannung am Ausgangsanschluss 18 gemäß dem Graphen 60 konstant gehalten werden. Der zuverlässige Betrieb der Rechnereinheit 12 als Verbraucher ist demnach permanent gewährleistet.

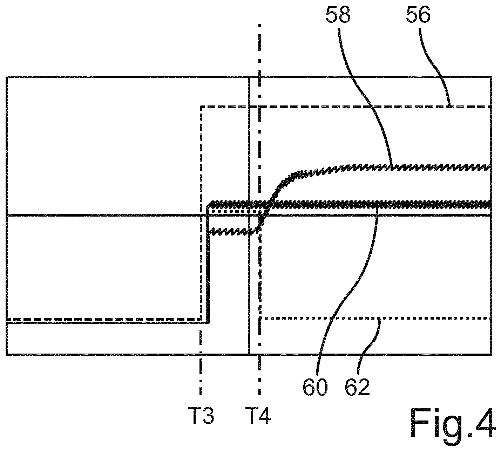

Fig. 4 zeigt eine weitere Funktion auf Basis der Schaltungsanordnung 10 gemäß Fig. 1, wobei hier jedoch das Widerstandsnetzwerk 32 unmittelbar mit seinem Mittelabgriff 50 an den Anschluss 54 der Bypass-Schaltung 28 angeschlossen ist. Die Rechnereinheit 12 greift hier also nicht in die Steuerung der Bypass-Schaltung 28 ein.

Dargestellt in Fig. 4 ist ein Einschaltvorgang der Leuchteinrichtung 36 insgesamt. Ersichtlich aus Fig. 4 ist der Einschaltvorgang zu einem Zeitpunkt T₃, bei dem die durch die Spannungsquelle 14 bereitgestellte Spannung gemäß dem Graphen 56 auf einen vorgegebenen Wert springt. Zugleich steigt unmittelbar nach dem Zeitpunkt T₃ auch die Spannung am Punkt 64 entsprechend steil an, und zwar auf ein vorgegebenes Niveau. Ebenso wird die Bypass-Schaltung 28 aktiviert, wie durch den Graphen 62 ersichtlich ist. Zu einem Zeitpunkt T₄ hat sich die Energieanforderung durch die Rechnereinheit 12 als Verbraucher stabilisiert, sodass ein kontinuierlicher Betrieb fortgeführt werden kann bei geringem Energieverbrauch oder die Rechnereinheit 12 wird wieder deaktiviert. Zu diesem Zweck ist mittels des Graphen 62 ersichtlich, dass die Bypass-Schaltung 28 zum Zeitpunkt T₄ deaktiviert wird. Es wird somit nunmehr nur noch Strom durch die Konstantstromschaltung 24 aus der Spannungsquelle 14 entnommen und dem Ladungsspeicher zugeführt.

Diese Ausgestaltung berücksichtigt, dass die Rechnereinheit 12 direkt nach dem Starten einen erhöhten Strombedarf hat. Der Strombedarf ist vorliegend größer als er durch die Konstantstromschaltung 24 bereitgestellt wird. Vorliegend beträgt eine Zeitdauer des hohen Stromflusses etwa 1,2 Sekunden. Während dieser Zeit bleibt die Spannung am Punkt 64 auf einem niedrigem Niveau, sodass die Bypass-Schaltung 28 mittels des Widerstandsnetzwerkes 32 weit genug aktiviert wird, um zusätzlich Energie aus der Spannungsquelle 14 zu liefern.

Die Ausführungsbeispiele dienen lediglich der Erläuterung der Erfindung und sollen diese nicht beschränken. So können natürlich Funktionen sowie auch die Schaltungsdetails der Schaltungsanordnungen und der einzelnen Schaltungen variieren, ohne den Grundgedanken der Erfindung zu verlassen. Darüber hinaus ist die Erfindung natürlich auch nicht auf die Anwendung bei Leuchteinrichtungen beschränkt, sondern kann gleichermaßen bei Energieversorgungen vorgesehen sein, die durch eine Spannungsquelle gebildet sind, insbesondere mit einem hohen Innenwiderstand.

Schließlich ist anzumerken, dass Merkmale, die als Vorrichtungsmerkmale angegeben sind, gleichermaßen auch als Verfahrensmerkmale formuliert sein können und umgekehrt.

### BEZUGSZEICHENLISTE

- 10: Schaltungsanordnung
- 12: Rechnereinheit
- 14: Spannungsquelle
- 16: Eingangsanschluss
- 18: Ausgangsanschluss
- 20: Kondensator
- 22: Kondensator
- 24: Konstantstromschaltung
- 26: Längsreglerschaltung
- 28: Bypass-Schaltung
- 30: Steuereinheit
- 32: Widerstandsnetzwerk
- 34: Schalteinheit
- 36: Leuchteinrichtung
- 38: Leuchtdioden
- 40: Referenzelement
- 42: Transistor
- 44: Widerstand
- 46: Widerstand
- 48: Kondensator
- 50: Mittelabgriff
- 52: Anschluss
- 54: Anschluss
- 56: Graph
- 58: Graph
- 60: Graph
- 62: Graph
- 64: Punkt
- 66: Punkt

## Patentansprüche

1. Schaltungsanordnung (10) zum Versorgen eines elektrischen Verbrauchers (12) mit elektrischer Energie aus einer Spannungsquelle (14), wobei die Schaltungsanordnung (10) aufweist:
- einen Eingangsanschluss (16) zum Anschließen an die Spannungsquelle (14),
- einen Ausgangsanschluss (18) zum Anschließen an den Verbraucher (12),
- einen elektrischen Ladungsspeicher (20, 22) zum Speichern von elektrischer Ladung,
- eine mit dem Eingangsanschluss (16) und dem Ladungsspeicher (20, 22) elektrisch gekoppelte Konstantstromschaltung (24) zum Beaufschlagen des Ladungsspeichers (20, 22) mit einem vorgebbaren elektrischen Strom,
- eine mit dem Ladungsspeicher (20, 22) und dem Ausgangsanschluss (18) elektrisch gekoppelte Längsreglerschaltung (26) zum Bereitstellen eines geregelten elektrischen Potentials am Ausgangsanschluss (18),
- eine parallel zur Konstantstromschaltung (24) mit dem Eingangsanschluss (16) und dem Ladungsspeicher (20, 22) elektrisch gekoppelte, mittels eines Steuersignals steuerbare Bypass-Schaltung (28) zum Beaufschlagen des Ladungsspeichers (20, 22) mit einem elektrischen Bypass-Strom sowie
- eine Steuereinheit (30) zum Bereitstellen des Steuersignals,
**dadurch gekennzeichnet, dass**
die Steuereinheit (30) ausgebildet ist, eine elektrische Ladungsspeicherspannung am Ladungsspeicher (20, 22) zu erfassen und das Steuersignal abhängig von der erfassten Ladungsspeicherspannung bereitzustellen.

2. Schaltungsanordnung nach Anspruch 1, **dadurch gekennzeichnet, dass** die Steuereinheit (30) eine Vergleichseinheit umfasst, die ausgebildet ist, die erfasste Ladungsspeicherspannung mit einem vorgebbaren Vergleichswert zu vergleichen und das Steuersignal abzugeben, wenn die Ladungsspeicherspannung kleiner als der Vergleichswert ist.

3. Schaltungsanordnung nach Anspruch 1 oder 2, **gekennzeichnet durch** ein an die Steuereinheit (30) angeschlossenes Widerstandsnetzwerk (32) zum Erfassen der Ladungsspeicherspannung.

4. Schaltungsanordnung nach Anspruch 3, **dadurch gekennzeichnet, dass** die Steuereinheit (30) das Widerstandnetzwerk (32) umfasst und das Widerstandnetzwerk (32) ausgebildet ist, das Steuersignal bereitzustellen.

5. Schaltungsanordnung nach einem der Ansprüche 1 bis 4, **dadurch gekennzeichnet, dass** die Steuereinheit (30) zumindest teilweise vom Verbraucher (12) umfasst ist.

6. Schaltungsanordnung nach einem der Ansprüche 1 bis 5, **dadurch gekennzeichnet, dass** der Ladungsspeicher (20, 22) einen ersten und einen zweiten elektrischen Kondensator (20, 22) aufweist, wobei zwischen den beiden Kondensatoren eine elektrische Schalteinheit (34) zum schaltenden elektrischen Koppeln der beiden Kondensatoren (20, 22) angeschlossen ist, wobei der erste Kondensator (20) an die Konstantstromschaltung (24) und der zweite Kondensator (22) an die Längsreglerschaltung (26) angeschlossen ist und die Steuereinheit (30) ausgebildet ist, als Ladungsspeicherspannung eine Kondensatorspannung am zweiten Kondensator (22) zu erfassen.

7. Schaltungsanordnung nach Anspruch 6, **dadurch gekennzeichnet, dass** die Schalteinheit (34) ausgebildet ist, eine Kondensatorspannung am ersten Kondensator (20) zu erfassen, den erfassten Wert mit einem Kondensatorspannungsvergleichswert zu vergleichen und den ersten mit dem zweiten Kondensator (22) dann zu elektrisch zu koppeln, wenn die Kondensatorspannung größer als der Kondensatorspannungsvergleichswert ist.

8. Leuchteinrichtung (36) mit einem Leuchtmittel (38), einer Spannungsquelle (14) zum Versorgen des Leuchtmittels (38) und eines elektrischen Verbrauchers (12) mit elektrischer Energie sowie mit einer Schaltungsanordnung (10) zum elektrischen Koppeln der Spannungsquelle (14) mit dem elektrischen Verbraucher (12),
**dadurch gekennzeichnet, dass**
die Schaltungsanordnung (10) nach einem der vorhergehenden Ansprüche ausgebildet ist.

9. Verfahren zum Versorgen eines elektrischen Verbrauchers (12) mit elektrischer Energie aus einer Spannungsquelle (14), bei dem ein elektrischer Ladungsspeicher (20, 22) zum Speichern von elektrischer Ladung mittels einer an eine Spannungsquelle (14) angeschlossenen Konstantstromschaltung (24) mit einem vorgegebenen elektrischen Strom beaufschlagt wird, wobei mittels einer am Ladungsspeicher (20, 22) angeschlossenen Längsreglerschaltung (26) ein geregeltes elektrisches Potential für den Verbraucher (12) bereitgestellt wird, wobei der Ladungsspeicher (20, 22) mittels einer Bypass-Schaltung (28) parallel zum Strom der Konstantstromschaltung (24) mit einem elektrischen Bypass-Strom beaufschlagt wird, wobei die Bypass-Schaltung (28) mittels eines Steuersignals einer Steuereinheit (30) gesteuert wird,
**dadurch gekennzeichnet, dass**
eine elektrische Ladungsspeicherspannung am Ladungsspeicher (20, 22) erfasst und das Steuersignal abhängig von der erfassten Ladungsspeicherspannung bereitgestellt wird.

10. Verfahren nach Anspruch 9, **dadurch gekennzeichnet, dass** die erfasste Ladungsspeicherspannung mit einem vorgebbaren Vergleichswert verglichen wird und das Steuersignal abgegeben wird, wenn die Ladungsspeicherspannung kleiner als der Vergleichswert ist.

11. Verfahren nach Anspruch 9 oder 10, **dadurch gekennzeichnet, dass** die Ladungsspeicherspannung mittels eines Widerstandsnetzwerks (32) erfasst wird, welches zugleich das Steuersignal bereitstellt.

12. Verfahren nach einem der Ansprüche 9 bis 11, **dadurch gekennzeichnet, dass** ein Wert des Bypass-Stroms von einem Wert der Ladungsspeicherspannung abhängt.

13. Verfahren nach einem der Ansprüche 9 bis 12, **dadurch gekennzeichnet, dass** der Bypass-Strom Stromimpulse umfasst.

14. Verfahren nach einem der Ansprüche 9 bis 12, **dadurch gekennzeichnet, dass** eine elektrische Kapazität des Ladungsspeichers (20, 22) abhängig von einem Aktivierungsenergiebedarf des Verbrauchers (12) gewählt wird.

## Claims

1. A circuit assembly (10) for supplying an electrical load (12) with electrical energy from a voltage source (14), wherein the circuit assembly (10) comprises:
- an input terminal (16) for connecting to the voltage source (14),
- an output terminal (18) for connecting to the load (12),
- an electrical charge storage (20, 22) for storing electrical charge,
- a constant current circuit (24) electrically coupled to the input terminal (16) and to the charge storage (20, 22) for applying a presettable electrical current to the charge storage (20, 22),
- a linear regulator circuit (26) electrically coupled to the charge storage (20, 22) and to the output terminal (18) for providing a regulated electrical potential at the output terminal (18),
- a bypass circuit (28) controllable by means of a control signal, which is electrically coupled to the input terminal (16) and to the charge storage (20, 22) in parallel with the constant current circuit (24), for applying an electrical bypass current to the charge storage (20, 22), as well as
- a control unit (30) for providing the control signal,
**characterized in that**
the control unit (30) is formed to detect an electrical charge storage voltage at the charge storage (20, 22) and to provide the control signal depending on the detected charge storage voltage.

2. The circuit assembly according to claim 1, **characterized in that** the control unit (30) includes a comparing unit, which is formed to compare the detected charge storage voltage to a presettable comparative value and to output the control signal if the charge storage voltage is less than the comparative value.

3. The circuit assembly according to claim 1 or 2, **characterized by** a resistor network (32) connected to the control unit (30) for detecting the charge storage voltage.

4. The circuit assembly according to claim 3, **characterized in that** the control unit (30) includes the resistor network (32) and the resistor network (32) is formed to provide the control signal.

5. The circuit assembly according to any one of claims 1 to 4, **characterized in that** the control unit (30) is at least partially encompassed by the load (12).

6. The circuit assembly according to any one of claims 1 to 5, **characterized in that** the charge storage (20, 22) comprises a first and a second electrical capacitor (20, 22), wherein an electrical switching unit (34) for electrically coupling the two capacitors (20, 22) in switching manner is connected between the two capacitors, wherein the first capacitor (20) is connected to the constant current circuit (24) and the second capacitor (22) is connected to the linear regulator circuit (26) and the control unit (30) is formed to detect a capacitor voltage at the second capacitor (22) as the charge storage voltage.

7. The circuit assembly according to claim 6, **characterized in that** the switching unit (34) is formed to detect a capacitor voltage at the first capacitor (20), to compare the detected value to a capacitor voltage comparative value and to electrically couple the first to the second capacitor (22) if the capacitor voltage is greater than the capacitor voltage comparative value.

8. A lighting device (36) with an illuminant (38), with a voltage source (14) for supplying the illuminant (38) and an electrical load (12) with electrical energy as well as with a circuit assembly (10) for electrically coupling the voltage source (14) to the electrical load (12),
**characterized in that**
the circuit assembly (10) is formed according to any one of the preceding claims.

9. A method for supplying an electrical load (12) with electrical energy from a voltage source (14), wherein a preset electrical current is applied to an electrical charge storage (20, 22) for storing electrical charge by means of a constant current circuit (24) connected to a voltage source (14), wherein a regulated electrical potential is provided for the load (12) by means of a linear regulator circuit (26) connected to the charge storage (20, 22), wherein an electrical bypass current is applied to the charge storage (20, 22) by means of a bypass circuit (28) in parallel with the current of the constant current circuit (24), wherein the bypass circuit (28) is controlled by means of a control signal of a control unit (30),
**characterized in that**
an electrical charge storage voltage at the charge storage (20, 22) is detected and the control signal is provided depending on the detected charge storage voltage.

10. The method according to claim 9, **characterized in that** the detected charge storage voltage is compared to a presettable comparative value and the control signal is output if the charge storage voltage is less than the comparative value.

11. The method according to claim 9 or 10, **characterized in that** the charge storage voltage is detected by means of a resistor network (32), which provides the control signal at the same time.

12. The method according to any one of claims 9 to 11, **characterized in that** a value of the bypass current depends on a value of the charge storage voltage.

13. The method according to any one of claims 9 to 12, **characterized in that** the bypass current includes current pulses.

14. The method according to any one of claims 9 to 12, **characterized in that** an electrical capacitance of the charge storage (20, 22) is selected depending on an activation energy demand of the load (12).

## Revendications

1. Arrangement de circuit (10) destiné à alimenter un récepteur électrique (12) avec de l'énergie électrique provenant d'une source de tension (14), l'arrangement de circuit (10) comprenant :
- une borne d'entrée (16) servant au raccordement à la source de tension (14),
- une borne de sortie (18) servant au raccordement au récepteur (12),
- un accumulateur de charge électrique (20, 22) destiné à stocker une charge électrique,
- un circuit à courant constant (24), connecté électriquement à la borne d'entrée (16) et à l'accumulateur de charge électrique (20, 22), destiné à alimenter l'accumulateur de charge électrique (20, 22) avec un courant électrique pouvant être prédéfini,
- un circuit régulateur en phase (26), connecté électriquement à l'accumulateur de charge électrique (20, 22) et à la borne de sortie (18), destiné à fournir un potentiel électrique régulé à la borne de sortie (18),
- un circuit de dérivation (28), connecté électriquement à la borne d'entrée (16) et à l'accumulateur de charge électrique (20, 22) en parallèle avec le circuit à courant constant (24), commandable au moyen d'un signal de commande, destiné à alimenter l'accumulateur de charge électrique (20, 22) avec un courant de dérivation électrique et
- une unité de commande (30) destinée à fournir le signal de commande,
**caractérisé en ce que**
l'unité de commande (30) est configurée pour détecter une tension d'accumulateur de charge électrique au niveau de l'accumulateur de charge (20, 22) et fournir le signal de commande en fonction de la tension d'accumulateur de charge détectée.

2. Arrangement de circuit selon la revendication 1, **caractérisé en ce que** l'unité de commande (30) comporte une unité de comparaison qui est configurée pour comparer la tension d'accumulateur de charge détectée avec une valeur comparative pouvant être prédéfinie et délivrer le signal de commande lorsque la tension d'accumulateur de charge est inférieure à la valeur comparative.

3. Arrangement de circuit selon la revendication 1 ou 2, **caractérisé par** un réseau résistif (32) raccordé à l'unité de commande (30), destiné à détecter la tension d'accumulateur de charge.

4. Arrangement de circuit selon la revendication 3, **caractérisé en ce que** l'unité de commande (30) comporte le réseau résistif (32) et le réseau résistif (32) est configuré pour fournir le signal de commande.

5. Arrangement de circuit selon l'une des revendications 1 à 4, **caractérisé en ce que** l'unité de commande (30) est au moins partiellement comprise par le récepteur (12).

6. Arrangement de circuit selon l'une des revendications 1 à 5, **caractérisé en ce que** l'accumulateur de charge (20, 22) possède un premier et un deuxième condensateur (20, 22) électriques, une unité de commutation (34) électrique destinée à la connexion électrique par commutation des deux condensateurs (20, 22) étant raccordée entre les deux condensateurs, le premier condensateur (20) étant raccordé au circuit à courant constant (24) et le deuxième condensateur (22) étant raccordé au circuit régulateur en phase (26) et l'unité de commande (30) étant configurée pour détecter, en tant que tension d'accumulateur de charge, une tension de condensateur au niveau du deuxième condensateur (22).

7. Arrangement de circuit selon la revendication 6, **caractérisé en ce que** l'unité de commutation (34) est configurée pour détecter une tension de condensateur au niveau du premier condensateur (20), comparer la valeur détectée avec une valeur comparative de tension de condensateur et connecter alors électriquement le premier condensateur au deuxième (22) lorsque la tension de condensateur est supérieure à la valeur comparative de tension de condensateur.

8. Dispositif d'éclairage (36) comprenant un moyen lumineux (38), une source de tension (14) destinée à alimenter le moyen lumineux (38) et un récepteur électrique (12) avec de l'énergie électrique ainsi qu'un arrangement de circuit (10) destiné à connecter électriquement la source de tension (14) au récepteur électrique (12),
**caractérisé en ce que**
l'arrangement de circuit (10) est configuré selon l'une des revendications précédentes.

9. Procédé pour alimenter un récepteur électrique (12) avec de l'énergie électrique provenant d'une source de tension (14), avec lequel un accumulateur de charge électrique (20, 22) destiné à stocker une charge électrique est alimenté avec un courant électrique prédéfini au moyen d'un circuit à courant constant (24) raccordé à une source de tension (14), un potentiel électrique régulé étant fourni pour le récepteur (12) au moyen d'un circuit régulateur en phase (26) raccordé à l'accumulateur de charge électrique (20, 22), l'accumulateur de charge électrique (20, 22) étant alimenté avec un courant de dérivation électrique au moyen d'un circuit de dérivation (28) en parallèle avec le courant du circuit à courant constant (24), le circuit de dérivation (28) étant commandé au moyen d'un signal de commande d'une unité de commande (30),
**caractérisé en ce que**
une tension d'accumulateur de charge électrique est détectée au niveau de l'accumulateur de charge (20, 22) et le signal de commande est fourni en fonction de la tension d'accumulateur de charge détectée.

10. Procédé selon la revendication 9, **caractérisé en ce que** la tension d'accumulateur de charge détectée est comparée avec une valeur comparative pouvant être prédéfinie et le signal de commande est délivré lorsque la tension d'accumulateur de charge est inférieure à la valeur comparative.

11. Procédé selon la revendication 9 ou 10, **caractérisé en ce que** la tension d'accumulateur de charge est détectée au moyen d'un réseau résistif (32), lequel fournit en même temps le signal de commande.

12. Procédé selon l'une des revendications 9 à 11, **caractérisé en ce qu'**une valeur du courant de dérivation dépend d'une valeur de la tension d'accumulateur de charge.

13. Procédé selon l'une des revendications 9 à 12, **caractérisé en ce que** le courant de dérivation comprend des impulsions de courant.

14. Procédé selon l'une des revendications 9 à 12, **caractérisé en ce que** la capacité électrique de l'accumulateur de charge (20, 22) est choisie en dépendance d'un besoin en énergie d'activation du récepteur (12).
